Europäisches Patentamt

European Patent Office

Office européen des brevets

(11) Veröffentlichungsnummer: **0 181 464**
**A2**

## (12) EUROPÄISCHE PATENTANMELDUNG

(21) Anmeldenummer: 85111764.8

(22) Anmeldetag: 17.09.85

(51) Int. Cl.⁴: **G08B 13/12**

(30) Priorität: 21.09.84 DE 3434737

(43) Veröffentlichungstag der Anmeldung:
21.05.86 Patentblatt 86/21

(84) Benannte Vertragsstaaten:
AT BE CH DE FR IT LI LU NL

(71) Anmelder: **Siemens Aktiengesellschaft
Berlin und München Wittelsbacherplatz 2
D-8000 München 2(DE)**

(72) Erfinder: **Mágori, Valentin, Dipl.-Phys.
Limburgstrasse 17
D-8000 München 90(DE)**

(54) Überwachungseinrichtung für Stäbe eines Zaunes bzw. Grobrechens.

(57) Überwachungseinrichtung insbesondere für Grobrechen und vorzugsweise für Grobrechen bei Kernreaktoranlagen mit rohrförmigen Stäben (1, 11). In das Rohrinnere ausgesandte (6) und an Reflexionselementen (4) reflektierte Ultraschallstrahlung (7, 17, 117) wird als Detektorsignal durch Echoprofilspeicherung ausgewertet, womit eine Verbiegung eines jeweiligen Stabes (11) sofort elektronisch zu detektieren ist.

FIG 1

Die vorliegende Erfindung bezieht sich auf eine Überwachungseinrichtung, wie im Oberbegriff des Patentanspruchs 1 angegeben.

Einerseits zur Sicherung eines Objekts als Zaun ausgebildet oder andererseits als Grobrechen angeordnet, werden Vorrichtungen verwendet, die aus nebeneinander angeordneten Stäben bestehen. Auch zur Materialersparnis kann vorgesehen sein, daß diese Stäbe hohle Rohre sind. Im Bereich ihrer jeweiligen Enden sind diese Rohre mittels Querverbindungen miteinander verbunden. Dabei ist oftmals erwünscht, über die Längsausdehnung derartiger Rohre bzw. Stäbe hinweg gesehen möglichst wenige oder gar keine quer dazu verlaufende Zwischenverbindungen zu haben. Dies dient bei Zäunen zur Erschwerung eines möglichen Versuches eines Überkletterns eines derartigen Zaunes bzw. der Vereinfachung des Reinigens eines derartigen, in den Weg einer Strömung gestellten Grobrechens. Damit bleibt aber noch das Problem, wie man in einfacher Weise überwachen kann, ob einzelne oder mehrere Stäbe bzw. Rohre eines solchen Zaunes bzw. eines solchen Grobrechens verbogen werden, sei es zum gewaltsamen Durchdringen eines solchen Zaunes bzw. Grobrechens, sei es durch ungewöhnliche Gegenstände, die an eine derartige Vorrichtung gelangen und Stäbe verbiegen.

Ein aktuelles Problem ist die Sicherung von Grobrechen von insbesondere Kernkraftwerken, wobei diese Grobrechen in Zu fluß- bzw. Abflußeinrichtungen, z.B . Kühlflußeinrichtungen, angeordnet sind.

Aufgabe der vorliegenden Erfindung ist es, eine Überwachungseinrichtung für oben angegebene Vorrichtungen anzugeben, mit der ein gewaltsames Verbiegen bereits einzelner Stäbe fortlaufend zu detektieren ist.

Diese Aufgabe wird durch eine Einrichtung gelöst, die die Merkmale des Patentanspruchs 1 aufweist.

Die Erfindung geht von der Überlegung aus, daß insbesondere bei Grobrechen, mit denen auch größere Gegenstände abzufangen sind, äußere Kontrolleinrichtungen nicht zu verwenden sind, da diese auch im normalen Betrieb gestört oder sogar zerstört werden könnte, ohne daß das diesen Umstand bewirkende Ereignis Anlaß zu einer Alarmauslösung wäre.

Insbesondere bei relativ langen Rechenstäben, z.B. mit einer Länge von 5 m oder mehr, müssen bereits relativ geringe Verbiegungen zuverlässig detektiert werden können, da bereits bei geringer Verbiegung derartig langer Stäbe genügend Durchschlupfbreite für eine Person erzielt werden kann.

Mit der erfindungsgemäßen Anwendung von Ultraschall ist tatsächlich die Aufgabe zu lösen und sind tatsächlich schon geringe Verbiegungen sofort und zuverlässig zu detektieren. Im Innern der rohrförmigen Stäbe sind, z.B. an der Rohrinnenwand angebracht oder in anderer Weise gehaltert, Ultraschall-Reflexionselemente vorgesehen, die als für den Ultraschall rückstreuende Körper dienen. Vorzugsweise an ein und demselben Ende des rohrförmigen Stabes ist jeweils ein Ultraschall-Sender und ein Ultraschall-Empfänger vorgesehen. Insbesondere arbeiten Sender und Empfänger mit ein und demselben Ultraschall-Wandler. Dieser strahlt Ultraschall in das Rohrinnere hinein und empfängt aus dem Rohrinnern zurückreflektierte Anteile dieser Ultraschall-Strahlung. Im Rohrinnern angebrachte Reflexionselemente ergeben ein bestimmtes, charakteristisches Reflexionsmuster. Erfolgt eine Verbiegung des betreffenden rohrförmigen Stabes, so ergibt sich für die Ultraschall-Ausbreitung im Rohrinnern zwangsläufig eine Veränderung, die zu einem veränderten Gesamtreflexionssignal führt. Eine solche Veränderung kann dann in erprobter Weise nach dem Prinzip der bekannten Echoprofilspeicherung detektiert werden. Dieses Prinzip besteht darin, daß das normale, ungestörte Gesamtreflexionssignal in zusammengenommen einer Vielzahl von Speicherplätzen gespeichert wird. Soweit keine Vorkommnisse eintreten, ändert sich die Einspeicherung für die einzelnen Speicherplätze höchstens geringfügig, nämlich innerhalb geringer Schwankungen. Eine Verbiegung des Rohres führt aber erwiesenermaßen zu deutlich merkbaren Änderungen der Speichersignale einzelner zugeordneter Speicherplätze. Ein zeitlich fortlaufend bzw. in zeitlichen Abständen hintereinanderfolgend vorgenommener Vergleich der in entsprechender Zeitfolge auftretenden Signale für einen bestimmten der Speicherplätze wird durchgeführt und eine eine vorgegebene Schwelle überschreitende Veränderung wird als Alarm auslösendes Detektorsignal verwendet. Vorzugsweise werden die speichernden und zeitlich aufeinanderfolgend miteinander zu vergleichenden, dem jeweiligen einzelnen Speicherplatz zugeordneten Empfangssignale in digitalisierter Form verarbeitet.

Weitere Einzelheiten zum Prinzip und zu Verfahren der Echoprofilspeicherung gehen hervor aus den deutschen Offenlegungsschriften P 3335421.9 (VPA 83 P 1762); P 2938969.3 (VPA 79 P 7178 BRD); P 2938968 (VPA 79 P 7179).

Weitere Erläuterungen der Erfindung gehen aus dem nachfolgend anhand der Figur beschriebenen Ausführungsbeispiel hervor.

Mit 1 und mit 11 sind je ein rohrförmiger Stab eines Zaunes oder insbesondere eines Grobrechens bezeichnet. Mit 2 sind obenerwähnte Querverbindungen bezeichnet. Über eine vergleichsweise zur Dicke des Stabes große Länge sind diese Stäbe 1, 11 frei von weiteren Querverbindungen, so daß diese Stäbe an sich relativ leicht gewaltsam in sich verbogen werden können. Für den Stab 11 ist eine solche, z.B. mittels einer Brechstange zu bewirkende Verbiegung 11' (übertrieben stark) angedeutet. Im Rohrinnern der Stäbe 1, 11 sind Ultraschall-Reflexionselemente angeordnet. Es können dies nach innen gehende Vorsprünge, z.B. von außen eingesetzte und innen vorspringende Schrauben oder Stifte und dergl. sein. Genügend und sogar vorzuziehen ist eine unregelmäßig verteilte Anbringung, die auch von einem Rohr zum andern Rohr verschieden sein kann, da jedes einzelne Rohr für sich genommen, z.B. in zeitlichen Abständen erfolgend, überwacht werden kann. Wie zum rohrförmigen Stab 11 dargestellt, ergibt eine Verbiegung eine örtliche Verlagerung der Elemente 4. Lediglich schematisch sind je ein Wandler 5, 15 angedeutet. Der einzelne Wandler 5, 15 ist so am offenen Ende des rohrförmigen Stabes 1, 11 angeordnet, daß der von ihm ausgesandte Ultraschall (siehe den Pfeil 6) in das Rohrinnere des Stabes 1, 11 gestrahlt wird. Einzelne an den jeweiligen Elementen 4 auftretende Reflexionssignale sind mit 7, 7', 7" bezeichnet. Die Summe dieser Reflexionssignale und das (vorzugsweise nachfolgend elektronisch auszublendende) bei abgeschlossenem Rohrende auftretende Reflexionssignal 71 ergeben zusammen das Gesamtreflexionssignal 17 bzw. 117, das vom Wandler 5 bzw. 15 empfangen wird. Mit 8 und 18 sind Anschlußleitungen der Wandler bezeichnet. Den Anschlußleitungen 8, 18 werden, vorzugsweise in zyklischer Folge hinsichtlich der einzelnen Wandler 5, 15, Sendesignal-Bursts zugeführt, so daß die einzelnen Wandler entsprechende Ultraschall-Bursts 6 aussenden. Gegebenenfalls ebenso in zyklischer Folge werden die nach Aussendung des jeweiligen einzelnen Bursts an den Anschlußleitungen 8, 18 auftretenden Empfangssignale

ausgewertet. Mit 20 ist auf eine Auswerteschaltung mit den Anschlußleitungen 8', 18' hingewiesen. Mit 9, 19 sind Empfangs-Burstsignale angedeutet, die untereinander von Stab zu Stab erheblich verschieden sein können. Im ungestörten Zustand des Stabes ist das Empfangs-Burstsignal eines bestimmten Stabes 1 oder 11 zeitlich bzw. wenigstens über relativ langen Zeitraum hinweg gleichbleibend, nämlich weil sich im Rohrinnern keine räumliche Veränderung ergibt. Erfolgt jedoch eine wie für den Stab 11 angedeutete Verbiegung, führt dies sofort zu einem veränderten Empfangs-Burstsignal.

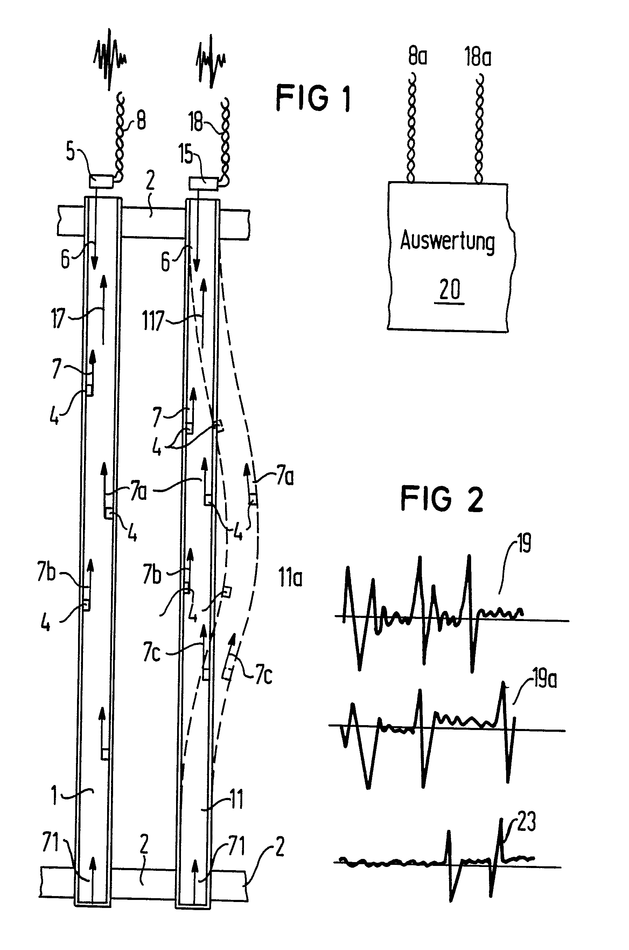

In Fig.2 ist mit 19 ein ungestörtes Empfangs-Burstsignal eines bestimmten rohrförmigen Stabes wiedergegeben. Das Empfangs-Burstsignal 19', das sich von dem Signal 19 ersichtlich unterscheidet, entspricht einem Stab 11, der inzwischen eine (wie in Fig.1 angedeutete) Verbiegung 11' erfahren hat. Der Vergleich der Signale 19 und 19' miteinander ist das Auswertekriterium bzw. der auftretende Unterschied ist das Detektionssignal 23.

**Ansprüche**

1. Überwachungseinrichtung für Stäbe eines Zaunes bzw. eines Grobrechens, wobei wenigstens einzelne Stäbe Rohre sind, die auf Verbiegung und dergleichen zu überwachen sind, **gekennzeichnet dadurch,**

- daß an einem offenen Ende des betreffenden rohrförmigen Stabes (1, 11) ein Ultraschall-Sender (5, 15) und ein Ultraschall-Empfänger (5, 15) vorgesehen sind und

- diese so angeordnet sind, daß Ultraschall-Aussendung (6) in das Rohrinnere hinein und Ultraschall-Empfang aus dem Rohrinneren kommender Ultraschallstrahlung (17, 117) erfolgt,

- daß im Rohrinneren Ultraschall-Reflexionselemente (4) örtlich positioniert vorgesehen sind und

- daß eine Auswerteelektronik (20) vorgesehen ist, die zur Signalauswertung nach dem Prinzip der Echoprofilspeicherung ausgebildet ist, wobei zeitlich aufeinanderfolgend das jeweilige Empfangssignal (19') mit zuvor erhaltenem Empfangssignal (19) verglichen wird, wobei diese Signale (19', 19) aus auf dem Rohrinnern empfangener Ultraschall-Strahlung (17, 117) beruhen.

2. Überwachungseinrichtung nach Anspruch 1, **gekennzeichnet dadurch,** daß Ultraschall-Sender und -Empfänger (5, 15) an ein und demselben Ende des jeweiligen rohrförmigen Stabes angeordnet sind.

3. Überwachungseinrichtung nach Anspruch 2, **gekennzeichnet dadurch,** daß Ultraschall-Sender und -Empfänger ein und denselben Wandler (5, 15) haben.

4. Überwachungseinrichtung nach Anspruch 1, 2 oder 3, **gekennzeichnet dadurch,** daß die Reflexionselemente (4) im Rohrinneren vorhandene Vorsprünge sind.

5. Überwachungseinrichtung nach Anspruch 1, 2 oder 3, **gekennzeichnet dadurch,** daß die Reflexionselemente (4) Körper sind, die an einem im Rohrinneren gespannten Draht oder dergleichen angeordnet sind.

6. Überwachungseinrichtung nach Anspruch 4 oder 5, **gekennzeichnet dadurch,** daß die Reflexionselemente zufällig verteilt sind.

7. Überwachungseinrichtung nach Anspruch 1 bis 6, **gekennzeichnet dadurch,** daß Soll- und Ist-Echoprofil durch Bildung der Korrelationsfunktion verglichen werden.

FIG 1

8a    18a

Auswertung

20

8
18
5
15
2
6
6
17
117
7
4
7
4
7a
7a
4
4
7b
7b
11a
4
4
7c
7c
1
11
71
71
2
2

FIG 2

19

19a

23